(19) **Europäisches Patentamt / European Patent Office / Office européen des brevets**

(11) **EP 4 480 789 B1**

(12) **EUROPEAN PATENT SPECIFICATION**

(45) Date of publication and mention
of the grant of the patent:
**15.07.2026  Bulletin 2026/29**

(21) Application number: **23756159.2**

(22) Date of filing: **31.01.2023**

(51) International Patent Classification (IPC):
**B62D 13/06** *(2006.01)*    **B60W 40/12** *(2012.01)*
**B60D 1/06** *(2006.01)*    **B62D 15/02** *(2006.01)*
**B60D 1/62** *(2006.01)*    **B60W 30/045** *(2012.01)*

(52) Cooperative Patent Classification (CPC):
**B62D 15/0285; B60D 1/06; B60D 1/62;**
**B60W 30/045; B60W 40/12;** B60W 2540/18;
B62D 13/06

(86) International application number:
**PCT/JP2023/003004**

(87) International publication number:
**WO 2023/157631 (24.08.2023 Gazette 2023/34)**

(54) **CONTROL DEVICE OF COMBINATION VEHICLE**

STEUERVORRICHTUNG FÜR EIN KOMBINATIONSFAHRZEUG

DISPOSITIF DE COMMANDE DE SEMI-REMORQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **15.02.2022   JP 2022021094**

(43) Date of publication of application:
**25.12.2024   Bulletin 2024/52**

(73) Proprietor: **JTEKT CORPORATION**
**Kariya-shi, Aichi-ken, 448-8652 (JP)**

(72) Inventors:
• **NITTA, Nobuhiro**
**Tokyo 103-0022 (JP)**
• **TOKORO, Hirotaka**
**Tokyo 103-0022 (JP)**

(74) Representative: **Winter, Brandl - Partnerschaft
mbB**
**Alois-Steinecker-Straße 22**
**85354 Freising (DE)**

(56) References cited:
JP-A- 2018 176 788    US-A1- 2016 101 811
US-A1- 2016 362 135    US-A1- 2016 362 135
US-A1- 2019 322 317    US-A1- 2019 322 317

**Description**

TECHNICAL FIELD

The present disclosure relates to a control device for a combination vehicle.

BACKGROUND ART

Conventionally, there is a combination vehicle in which a trailer is combined with a vehicle serving as a tractor. A system of Patent Document 1 has a function of automatically determining dimensions of a trailer. The dimensions of the trailer are used, for example, to control the behavior of the trailer. The system uses a mathematical model of a vehicle and the trailer to estimate the dimensions of the trailer. The mathematical model includes a kinematic model, a static model, or a dynamic model. The dimensions of the trailer include the length of the trailer. Patent Document 1 discloses: a control device for a combination vehicle including a tractor including a steered wheel configured to change a direction of travel of the vehicle, and a trailer towed by the tractor, the control device comprising an estimation unit configured to estimate a length of the trailer based on a mathematical expression obtained by solving, for the length of the trailer, simultaneous equations including an equation of motion for a hitch angle velocity that is a time rate of change in a hitch angle.

Related Art Documents

Patent Documents

Patent Document 1: US Patent Application Publication No. 2019/0322317

SUMMARY OF THE INVENTION

Problem to be Solved by the Invention

There is a demand that the control device for the combination vehicle more appropriately estimate the length of the trailer.

Means for Solving the Problem

A control device for a combination vehicle according to one aspect of the present disclosure is a control device for a combination vehicle including a tractor including a steered wheel configured to change a direction of travel of the vehicle, and a trailer towed by the tractor. The control device for the combination vehicle includes an estimation unit. The estimation unit is configured to estimate a length of the trailer based on a mathematical expression obtained by solving, for the length of the trailer, simultaneous equations including an equation of motion for a hitch angle velocity that is a time rate of change in a hitch angle and an equation of motion for a virtual steering angle velocity that is a time rate of change in a virtual steering angle. The mathematical expression includes the virtual steering angle velocity as a parameter.

The hitch angle is an angle between a central axis extending in a longitudinal direction of the tractor and a central axis extending in a longitudinal direction of the trailer. The virtual steering angle is a steering angle of a virtual steered wheel of the trailer when the trailer is regarded as a single vehicle.

BRIEF DESCRIPTION OF THE DRAWINGS

[FIG. 1] FIG. 1 is a perspective view of a combination vehicle including an embodiment of a control device for the combination vehicle.
[FIG. 2] FIG. 2 is a block diagram of the embodiment of the control device for the combination vehicle
[FIG. 3] FIG. 3 is a kinematic model of the combination vehicle according to the embodiment.
[FIG. 4] FIG. 4 is a kinematic model of a trailer according to the embodiment.
[FIG. 5] FIG. 5 is a block diagram of a trailer length estimation unit according to the embodiment.
[FIG. 6] FIG. 6 is a flowchart showing the procedure of a trailer length estimation process according to the embodiment.
[FIG. 7] FIG. 7 is a diagram illustrating changes in state quantities of the combination vehicle related to the trailer length estimation process, in which graph (a) shows changes in steering angle of front wheels of a tractor during a period from the start of turning of the combination vehicle to the end of turning, graph (b) shows changes in hitch angle during the period from the start of turning of the combination vehicle to the end of turning, and graph (c) shows a change in trailer length before and after the start of turning of the combination vehicle.

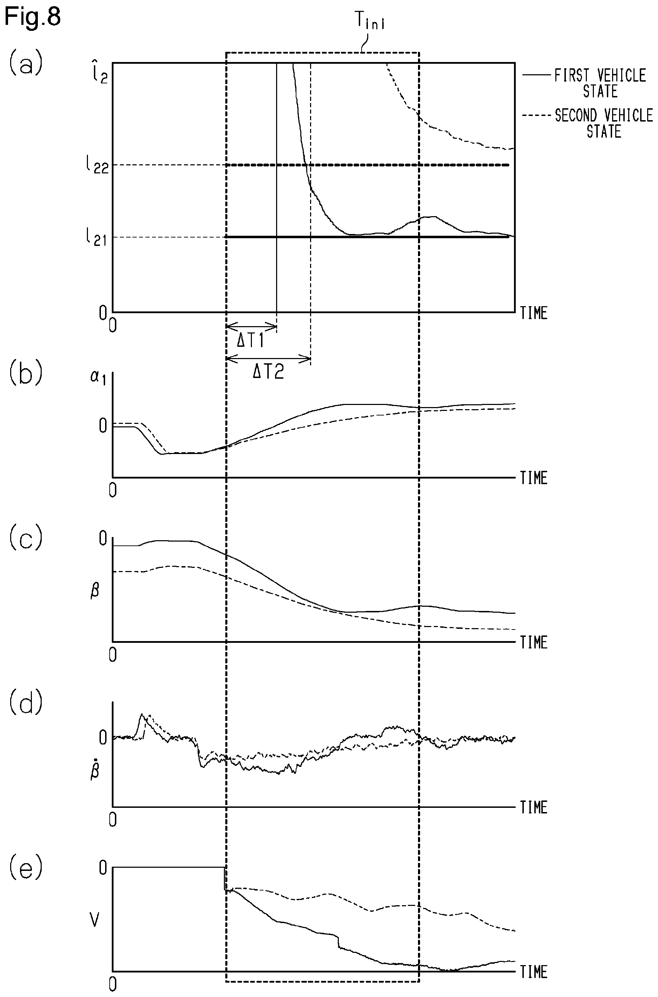

[FIG. 8] FIG. 8 is a diagram illustrating the trailer length estimation process, in which graph (a) shows a comparative example of changes in estimation results of a trailer length during the period from the start of turning of the combination vehicle to the end of turning, graph (b) shows changes in the steering angle of the front wheels of the tractor during the period from the start of turning of the combination vehicle to the end of turning, graph (c) shows changes in the hitch angle during the period from the start of turning of the combination vehicle to the end of turning, graph (d) shows changes in hitch angle velocity during the period from the start of turning of the combination vehicle to the end of turning, and graph (e) shows changes in vehicle speed during the period from the start of turning of the combination vehicle to the end of turning.

[FIG. 9] FIG. 9 is a graph showing changes in the estimation results of the trailer length during the period from the start of turning of the combination vehicle to the end of turning according to the embodiment.

MODES FOR CARRYING OUT THE INVENTION

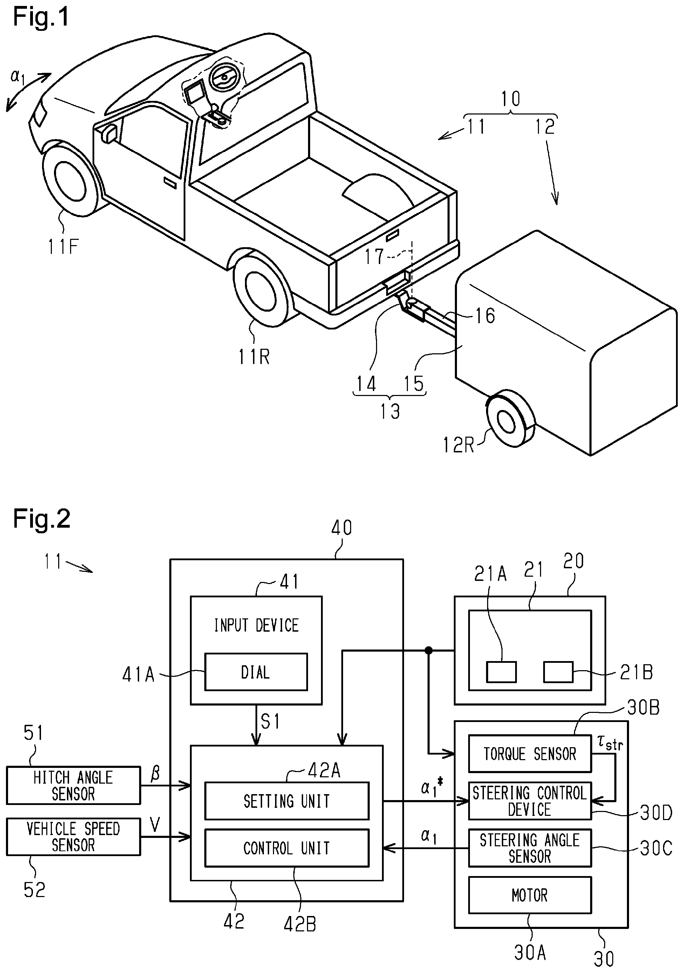

A control device for a combination vehicle according to an embodiment will be described.
As shown in FIG. 1, a combination vehicle 10 includes a tractor 11 and a trailer 12. Although there are various types of tractor 11, a pickup truck that is one type of small freight vehicle is herein taken as an example. The tractor 11 includes front wheels 11F and rear wheels 11R. The front wheels 11F include two wheels, namely a right front wheel and a left front wheel, and the rear wheels 11R include two wheels, namely a right rear wheel and a left rear wheel. FIG. 1 shows only the left front wheel and the left rear wheel. The front wheels 11F and a steering wheel are connected to each other via a steering mechanism that is not shown so that power can be transmitted therebetween. The front wheels 11F are steered wheels. The steered wheels refer to wheels that change the direction of travel of the tractor 11 by moving in response to an operation on the steering wheel.

Although the trailer 12 has various shapes and sizes depending on applications, a box-shaped trailer is herein taken as an example. The trailer 12 includes wheels 12R. The wheels 12R include two wheels, namely a right wheel and a left wheel. FIG. 1 shows only the left wheel.

The trailer 12 is connected to the rear of the tractor 11 via a ball joint 13. The ball joint 13 includes a hitch ball 14 and a hitch coupler 15. The hitch ball 14 is provided at the rear of the tractor 11 via a hitch member. The hitch coupler 15 is provided at the tip of a tongue 16 that protrudes from the front of the trailer 12. When the hitch coupler 15 is attached to the hitch ball 14, the trailer 12 is connected to the tractor 11 so as to be rotatable about an axis 17. The axis 17 extends in a height direction of the tractor 11.

As shown in FIG. 2, the tractor 11 includes a display device 20, a power steering device 30, and a reverse assist device 40.
The display device 20 is provided, for example, on an instrument panel in a vehicle cabin. The display device 20 is, for example, a touch panel. It is possible to input data or give instructions for operations of in-vehicle devices by touching display on a screen 21. The screen 21 displays, for example, an assist start button 21A and an assist end button 21B. The assist start button 21A is operated when turning on a reverse assist function of the combination vehicle 10. The assist end button 21B is operated when turning off the reverse assist function of the combination vehicle 10.

The power steering device 30 is a system for assisting an operator in steering the steering wheel, and includes a motor 30A, a torque sensor 30B, a steering angle sensor 30C, and a steering control device 30D. The operator includes a driver who drives the combination vehicle 10 in the vehicle cabin of the tractor 11.

The motor 30A generates an assist force. The assist force is a force for assisting steering by the steering wheel. The torque of the motor 30A is applied to the steering mechanism of the front wheels 11F via a speed reduction mechanism. The torque sensor 30B detects a steering torque $\tau_{str}$ that is a torque applied to the steering wheel. The steering angle sensor 30C detects a steering angle $\alpha_1$ that is a turning angle of the front wheels 11F based on, for example, a rotation angle of the motor 30A. The front wheels 11F and the motor 30A operate in conjunction with each other via the steering mechanism. Therefore, there is a correlation between the rotation angle of the motor 30A and the steering angle $\alpha_1$ of the front wheels 11F. Thus, the steering angle $\alpha_1$ of the front wheel 11F can be determined based on the rotation angle of the motor 30A.

The steering control device 30D executes assist control when the reverse assist function of the combination vehicle 10 is off. That is, the steering control device 30D controls energization of the motor 30A based on the steering torque $\tau_{str}$ detected by the torque sensor 30B to cause the motor 30A to generate an assist force according to the steering torque $\tau_{str}$.

The steering control device 30D executes steering control on the front wheels 11F when the reverse assist function of the combination vehicle 10 is on. That is, when the reverse assist function of the combination vehicle 10 is on, the steering control device 30D controls the steering angle $\alpha_1$ of the front wheels 11F by controlling the rotation angle of the motor 30A based on a target steering angle $\alpha_1{}^*$ generated by the reverse assist device 40. The target steering angle $\alpha_1{}^*$ is a

target value of the steering angle $\alpha_1$ of the front wheel 11F. The steering control device 30D controls the operation of the motor 30A by executing feedback control on the steering angle $\alpha_1$ of the front wheels 11F detected by the steering angle sensor 30C so that the steering angle $\alpha_1$ agrees with the target steering angle $\alpha_1^*$.

The reverse assist device 40 assists the reverse operation of the combination vehicle 10 when the reverse assist function of the combination vehicle 10 is on. The reverse assist device 40 calculates the target steering angle $\alpha_1^*$ of the front wheels 11F based on a reverse direction or a reverse route of the combination vehicle 10 specified by the operator and the steering angle $\alpha_1$ of the front wheels 11F detected by the steering angle sensor 30C. The target steering angle $\alpha_1^*$ is a target value of the steering angle $\alpha_1$ of the front wheels 11F required for the combination vehicle 10 to move in the reverse direction or along the reverse route of the combination vehicle 10 specified by the operator. When the reverse assist function of the combination vehicle 10 is off, the reverse assist device 40 does not calculate the target steering angle $\alpha_1^*$.

<Reverse Assist Device>

Next, the reverse assist device 40 will be described in detail.

As shown in FIG. 2, the reverse assist device 40 includes an input device 41 and a control device 42.

The input device 41 includes a dial 41A as an operation member. The dial 41A is provided, for example, on a center console in the vehicle cabin. The dial 41A is operated by the operator when specifying the reverse direction or the reverse route of the combination vehicle 10. The reverse direction or the reverse route includes, for example, a reverse left turn, a reverse right turn, and a straight reverse movement. When the combination vehicle 10 is turned to the left in reverse, the dial 41A is operated counterclockwise with respect to a reference position corresponding to a straight route. When the combination vehicle 10 is turned to the right in reverse, the dial 41A is operated clockwise with respect to the reference position. When the combination vehicle 10 is moved straight in reverse, the dial 41A is maintained at the reference position. The input device 41 generates an electric signal S1 according to the operation amount or the operation position of the dial 41A with respect to the reference position.

The control device 42 includes a processing circuit including any one of the following three components A1, A2, A3.

A1. One or more processors that operate according to a computer program that is software. The processor includes a CPU (central processing unit) and a memory.

A2. One or more dedicated hardware circuits, such as an application specific integrated circuit (ASIC), that perform at least part of various processes. The ASIC includes a CPU and a memory.

A3. A hardware circuit obtained by combining the components A1, A2.

The memory is a medium that can be read by a computer (in this case, the CPU) and stores programs that describe processes or instructions for the computer. The memory includes a RAM (random access memory) and a ROM (read only memory). The CPU executes various types of control by executing the programs stored in the memory at a predetermined calculation cycle. The programs include a program for executing reverse assist control for the combination vehicle 10. The reverse assist control refers to control for assisting the reverse operation of the combination vehicle 10.

The control device 42 executes the reverse assist control for the combination vehicle 10. The control device 42 starts executing the reverse assist control when the operator performs an operation to start the reverse assist control. The control device 42 stops executing the reverse assist control when the operator performs an operation to end the reverse assist control. The operator performs the operations to start and end the reverse assist control via the display device 20. When the assist start button 21A displayed on the screen 21 of the display device 20 is touched, the control device 42 starts executing the reverse assist control. When the assist end button 21B displayed on the screen 21 of the display device 20 is touched, the control device 42 ends the execution of the reverse assist control.

During the execution of the reverse assist control, the control device 42 controls the reverse route of the combination vehicle 10 via the power steering device 30 so that the combination vehicle 10 moves in the reverse direction or along the reverse route of the combination vehicle 10 specified by the operator.

The control device 42 includes a setting unit 42A and a control unit 42B.

The setting unit 42A sets a target virtual steering angle $\alpha_2^*$ of the trailer 12 based on the electric signal S1 generated by the input device 41, that is, the operation amount or the operation position of the dial 41A with respect to the reference position. The target virtual steering angle $\alpha_2^*$ is a target value of a virtual steering angle $\alpha_2$ of the trailer 12. The virtual steering angle $\alpha_2$ refers to an apparent steering angle when the trailer 12 is virtually separated from the tractor 11 and regarded as a single vehicle including virtual front wheels. The setting unit 42A calculates the target virtual steering angle $\alpha_2^*$ corresponding to the operation amount or the operation position of the dial 41A, for example, using a map that defines the relationship between the operation amount or the operation position of the dial 41A and the target virtual steering angle $\alpha_2^*$ of the trailer 12. The operator can specify the target virtual steering angle $\alpha_2^*$ according to a desired reverse route for reversing the trailer 12 by operating the dial 41A.

The control unit 42B acquires the target virtual steering angle $\alpha_2^*$ set by the setting unit 42A, a hitch angle $\beta$ detected by an in-vehicle hitch angle sensor 51, a vehicle speed V detected by an in-vehicle vehicle speed sensor 52, and

the steering angle $\alpha_1$ detected by the steering angle sensor 30C. The hitch angle $\beta$ refers to an angle between a central axis extending in a longitudinal direction of the tractor 11 and a central axis extending in a longitudinal direction of the trailer 12. The hitch angle $\beta$ is also referred to as a bending angle of the trailer 12.

The control unit 42B calculates the target steering angle $\alpha_1^*$ of the front wheels 11F of the tractor 11 based on the target virtual steering angle $\alpha_2^*$ set by the setting unit 42A and the hitch angle $\beta$, the vehicle speed V, and the steering angle $\alpha_1$ detected by the sensors. The control unit 42B calculates the target steering angle $\alpha_1^*$ of the front wheels 11F so that the virtual steering angle $\alpha_2$ of the trailer 12 converges to the target virtual steering angle $\alpha_2^*$. That is, the control unit 42B calculates the target steering angle $\alpha_1^*$ of the front wheels 11F by executing feedback control on the virtual steering angle $\alpha_2$ of the trailer 12 so that the virtual steering angle $\alpha_2$ agrees with the target virtual steering angle $\alpha_2^*$. The control unit 42B may calculate the target steering angle $\alpha_1^*$ using, for example, nonlinear model predictive control (NMPC).

<Kinematic Model of Combination Vehicle>

Next, a kinematic model indicating the behavior of the combination vehicle 10 moving in a plane will be described.

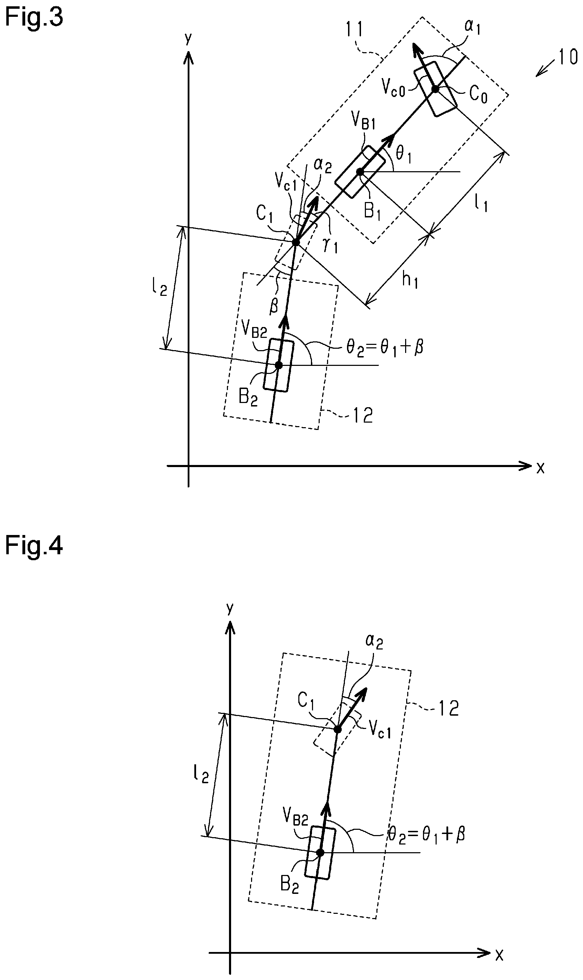

As shown in FIG. 3, the kinematic model of the combination vehicle 10 can be considered as an equivalent model in which the right and left wheels are shifted to the central axis of the vehicle body in a two-dimensional xy coordinate system fixed to the ground. The kinematic model in FIG. 3 is a kinematic model when the combination vehicle 10 moves forward. In the kinematic model of FIG. 3, in order to clarify the behavior of the combination vehicle 10 within the range of kinematics, it is assumed that no skid occurs in tires of the combination vehicle 10 at extremely low speeds and the combination vehicle 10 has a velocity vector only in the direction of travel. It is also assumed that the vehicle is driven at a constant speed. It is also assumed that the road surface is flat and there is no disturbance from the outside of the combination vehicle 10.

In the kinematic model of FIG. 3, parameters of the combination vehicle 10 used to describe the kinematic relationship between the tractor 11 and the trailer 12 are as follows.

$C_0$: Front wheel 11F of tractor 11
$B_1$: Rear wheel 11R of tractor 11
$C_1$: Hitch point of tractor 11 (point indicating position of hitch ball 14)
$B_2$: Wheel of trailer 12
$V_{c0}$: Velocity vector of front wheel 11F of tractor 11
$V_{B1}$: Velocity vector of rear wheel 11R of tractor 11
$V_{c1}$: Velocity vector of hitch point $C_1$ of tractor 11
$V_{B2}$: Velocity vector of trailer 12
$\alpha_1$: Steering angle of front wheel 11F of tractor 11
$\alpha_2$: Virtual steering angle of trailer 12
$\gamma_1$: Intermediate variable (angle between central axis of tractor 11 and velocity vector $V_{c1}$ of hitch point $C_1$)
$\theta_1$: Attitude angle of tractor 11 (angle between central axis of tractor 11 and X-axis)
$\theta_2$: Attitude angle of trailer 12 (angle between central axis of trailer 12 and X-axis)
$\beta$: Hitch angle (angle between central axis of tractor 11 and central axis of trailer 12)
$l_1$: Wheelbase of tractor 11
$h_1$: Distance between rear wheel 11R of tractor 11 and hitch point $C_1$
$l_2$: Virtual wheelbase of trailer 12

The signs of each parameter are as follows. That is, the tractor attitude angle $\theta_1$ is positive in the counterclockwise direction with respect to the X-axis. The steering angle $\alpha_1$ of the front wheel 11F of the tractor 11 and the intermediate variable $\gamma_1$ are positive in the counterclockwise direction with respect to the central axis of the tractor 11. The hitch angle $\beta$ is positive in the counterclockwise direction with respect to the central axis of the tractor 11 or its extension line. The vehicle speed V is positive for the forward movement and negative for the reverse movement. In the following description, when a parameter that is a positive value changes away from "0", it is said that "the absolute value increases in a positive direction." When a parameter that is a negative value changes away from "0", it is said that "the absolute value increases in a negative direction."

As shown in FIG. 3, the tractor 11 moves according to the velocity vector $V_{c0}$ of the front wheel 11F. The trailer 12 moves according to the velocity vector $V_{c1}$ of the hitch point $C_1$ that is the point of connection to the tractor 11. From this, the velocity vector $V_{c1}$ of the hitch point $C_1$ as seen from the trailer 12 can be regarded as a velocity vector of the virtual front wheel of the trailer 12. In the kinematic model of FIG. 3, the angle between the velocity vector $V_{c1}$ of the hitch point $C_1$ and the central axis of the trailer 12 is "$\beta - \gamma_1$". In this case, when the trailer 12 is virtually separated from the tractor 11 and regarded as a single vehicle including the virtual front wheel as shown in FIG. 4, the virtual front wheel can be regarded as being steered at the virtual steering angle $\alpha_2$ ($= -(\beta - \gamma_1)$) that is an apparent steering angle. From this, it is understood that the trailer 12 can be considered as a single vehicle. In the kinematic model for the reverse movement of the combination vehicle 10, the velocity vectors are in the opposite directions to those in the kinematic model for the forward movement in FIG. 3.

The virtual steering angle $\alpha_2$ of the trailer 12 is represented by the following expression 1.

[Math. 1]

$$\alpha_2 = -\beta - \text{atan}\left(\frac{h_1}{l_1}\tan\alpha_1\right)$$

where "$\beta$" is the hitch angle, "$l_1$" is the wheelbase of the tractor 11, "$h_1$" is the distance between the rear wheel 11R of the tractor 11 and the hitch point $C_1$, "$\alpha_1$" is the steering angle of the front wheel 11F of the tractor 11, and "atan" is an arctangent function.

<Supplementary Description of Configuration of Control Device 42>

Next, supplementary description will be given about the configuration of the control device 42.

The control device 42 has a function of controlling the behavior of the combination vehicle 10 using control parameters. The control parameters are stored in a storage device of the control device 42. The control parameters include vehicle specifications. The vehicle specifications include the length of the trailer 12. Various trailers 12 having different lengths are connected to the tractor 11. Therefore, the control device 42 has a function of estimating the length of the trailer 12.

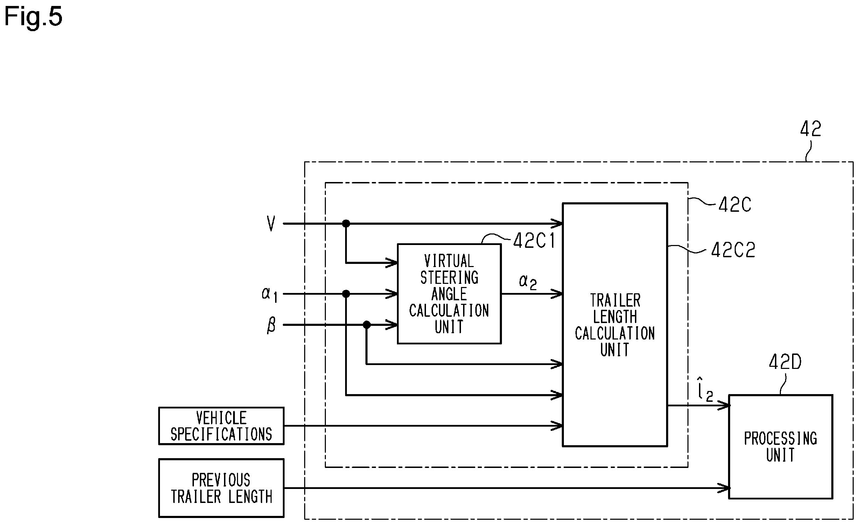

As shown in FIG. 5, the control device 42 includes an estimation unit 42C. The estimation unit 42C estimates the length of the trailer 12 based on state quantities of the combination vehicle 10 and the vehicle specifications. The estimation unit 42C includes a virtual steering angle calculation unit 42C1 and a trailer length calculation unit 42C2.

The virtual steering angle calculation unit 42C1 calculates the virtual steering angle $\alpha_2$. The virtual steering angle calculation unit 42C1 acquires the vehicle speed V detected by the vehicle speed sensor 52, the steering angle $\alpha_1$ of the front wheel 11F detected by the steering angle sensor 30C, and the hitch angle $\beta$ detected by the hitch angle sensor 51. The virtual steering angle calculation unit 42C1 acquires the vehicle specifications required for the calculation of the virtual steering angle $\alpha_2$. The vehicle specifications include the wheelbase $l_1$ of the tractor 11 and the distance $h_1$ between the rear wheel 11R of the tractor 11 and the hitch point $C_1$. The vehicle specifications are stored in the storage device of the control device 42. The virtual steering angle calculation unit 42C1 calculates the virtual steering angle $\alpha_2$ by applying the vehicle speed V, the steering angle $\alpha_1$ of the front wheel 11F, the hitch angle $\beta$, and the values of the vehicle specifications to the above expression 1.

The trailer length calculation unit 42C2 calculates the length of the trailer 12. The trailer length calculation unit 42C2 calculates the virtual wheelbase $l_2$ of the trailer 12 as the length of the trailer 12. The virtual wheelbase $l_2$ is the distance between axes of the virtual front wheel (= hitch point $C_1$) of the trailer 12 and the wheel 12R serving as the rear wheel. The virtual wheelbase $l_2$ is a value that reflects the body length of the trailer 12. As the virtual wheelbase $l_2$ increases, the overall body length of the trailer 12 necessarily increases.

The trailer length calculation unit 42C2 acquires the virtual steering angle $\alpha_2$ calculated by the virtual steering angle calculation unit 42C1, the vehicle speed V detected by the vehicle speed sensor 52, the steering angle $\alpha_1$ of the front wheel 11F detected by the steering angle sensor 30C, and the hitch angle $\beta$ detected by the hitch angle sensor 51. The virtual steering angle calculation unit 42C1 acquires the vehicle specifications required for the calculation of the length of the trailer 12. The vehicle specifications include the wheelbase $l_1$ of the tractor 11 and the distance $h_1$ between the rear wheel 11R of the tractor 11 and the hitch point $C_1$. The trailer length calculation unit 42C2 calculates an estimated trailer length $l_2\hat{}$ based on the vehicle speed V, the steering angle $\alpha_1$ of the front wheel 11F, the hitch angle $\beta$, the virtual steering angle $\alpha_2$, and the values of the vehicle specifications. "^" indicates an estimated value.

The trailer length calculation unit 42C2 calculates the estimated trailer length $l_2\hat{}$ using the following expression 4 obtained from the expressions 2 and 3.
The expression 2 is an equation of motion for a hitch angle velocity $\beta(\cdot)$ that is a time rate of change in the hitch angle $\beta$. The dot "·" indicates a time derivative.

[Math. 2]

$$\dot{\beta} = -\frac{V_{B1}}{l_2}\sin\beta - \frac{V_{B1}}{l_1 l_2}(l_2 + h_1\cos\beta)\tan\alpha_1$$

where "$l_1$" is the wheelbase of the tractor 11, "$l_2$" is the virtual wheelbase of the trailer 12, "$V_{B1}$" is the velocity vector of the rear wheel 11R of the tractor 11, "$h_1$" is the distance between the rear wheel 11R of the tractor 11 and the hitch point $C_1$, and "$\alpha_1$" is the steering angle of the front wheel 11F of the tractor 11.

The expression 3 is an equation of motion for a virtual steering angle velocity $\alpha_2(\cdot)$ that is a time rate of change in the virtual steering angle $\alpha_2$. The dot "$\cdot$" indicates a time derivative.

[Math. 3]

$$\dot{\alpha_2} = -\dot{\beta} - \frac{h_1}{l_1 \cos^2(\alpha_1) + \frac{h_1^2}{l_1}\sin^2(\alpha_1)}\dot{\alpha_1}$$

where "$\beta(\cdot)$" is the hitch angle velocity, "$l_1$" is the wheelbase of the tractor 11, "$h_1$" is the distance between the rear wheel 11R of the tractor 11 and the hitch point $C_1$, and "$\alpha_1$" is the steering angle of the front wheel 11F of the tractor 11.

By solving the simultaneous equations of the expressions 2 and 3 for the virtual wheelbase $l_2$ of the trailer 12, an expression 4 is obtained.

[Math. 4]

$$l_2 = \frac{V\left(\sin(\beta) + \frac{h_1}{l_1}\cos^2(\beta)\right)}{\dot{\alpha_2} + \frac{h_1}{l_1 \cos^2(\alpha_1) + \frac{h_1^2}{l_1}\sin^2(\alpha_1)}\dot{\alpha_1} - \frac{V}{l_1}\tan(\alpha_1)}$$

In the expression 4, "1/denominator" is a calculation coefficient.

As shown in FIG. 5, the control device 42 includes a processing unit 42D. The processing unit 42D executes a predetermined process based on the estimated trailer length $l_2{}^\wedge$ calculated by the estimation unit 42C.

The length of the trailer 12 is one of the control parameters to be used to control the behavior of the combination vehicle 10. The processing unit 42D executes a process of reflecting the estimated trailer length $l_2{}^\wedge$ calculated by the estimation unit 42C as a control parameter of the combination vehicle 10. For example, when the trailer 12 is replaced, the estimated trailer length $l_2{}^\wedge$ of the trailer 12 after the replacement is reflected in the control parameter of the combination vehicle 10. The control device 42 can control the behavior of the combination vehicle 10 based on the estimated trailer length $l_2{}^\wedge$ of the trailer 12 after the replacement. Therefore, even after the trailer 12 has been replaced, the behavior controllability of the combination vehicle 10 can be ensured.

The processing unit 42D may execute a process for suppressing the occurrence of a jackknife phenomenon. The jackknife phenomenon refers to a phenomenon in which the connection portion between the tractor 11 and the trailer 12 bends significantly when the combination vehicle 10 is moved in reverse. The length of the trailer 12 affects a permissible range of the hitch angle $\beta$ before the occurrence of the jackknife phenomenon. Therefore, a limit value for the change in the hitch angle $\beta$ may be set in the process of executing the behavior control on the combination vehicle 10. For example, the processing unit 42D executes a process of correcting the limit value for the change in the hitch angle $\beta$ to a more appropriate value according to the estimated trailer length $l_2{}^\wedge$ calculated by the estimation unit 42C.

When the processing unit 42D acquires the estimated trailer length $l_2{}^\wedge$, the hitch angle $\beta$ may reach a value within a jackknife range. The jackknife range is an angle range of the hitch angle $\beta$ in which the jackknife phenomenon may occur. In this case, the processing unit 42D may execute a process for notifying the operator of the combination vehicle 10 that the jackknife phenomenon may occur. The processing unit 42D generates, for example, a notification command signal for the display device 20. The operator of the combination vehicle 10 can visually recognize that the jackknife phenomenon may occur.

The processing unit 42D may notify, by emitting a sound through an in-vehicle speaker, the operator of the combination vehicle 10 that the jackknife phenomenon may occur. The operator of the combination vehicle 10 can auditorily recognize that the jackknife phenomenon may occur.

The processing unit 42D may execute a process for controlling the behavior of the combination vehicle 10. For example, when there is a possibility of the occurrence of the jackknife phenomenon, the processing unit 42D may execute a process for temporarily decelerating or stopping the combination vehicle 10. The processing unit 42D generates a deceleration command signal or a stop command signal for a braking device of the combination vehicle 10. The occurrence of the jackknife phenomenon can be suppressed by temporarily decelerating or stopping the combination vehicle 10 through the operation of the braking device.

The processing unit 42D may execute a process for detecting an abnormality of the combination vehicle 10. The abnormality includes, for example, disconnection of the trailer 12 from the tractor 11. The operator of the combination vehicle 10 may mistakenly believe that the trailer 12 is connected to the tractor 11 though the trailer 12 is not connected to the tractor 11 in actuality. The abnormality also includes electrical disconnection of the hitch angle sensor 51 from the control device 42. For example, a break in a signal line connecting the hitch angle sensor 51 and the control device 42 is conceivable.

When the trailer 12 is not connected to the tractor 11, the hitch angle $\beta$ detected by the hitch angle sensor 51 does not change even though the steering angle $\alpha_1$ of the front wheel 11F changes. When the hitch angle sensor 51 is not electrically connected to the control device 42, the control device 42 cannot recognize the change in the hitch angle $\beta$. Therefore, the trailer length calculation unit 42C2 calculates completely different values of the estimated trailer length $l_2{}^\wedge$ in response to the change in the steering angle $\alpha_1$ of the front wheel 11F of the tractor 11. The processing unit 42D determines whether an abnormality has occurred based on, for example, the degree of deviation between the values of the estimated trailer length $l_2{}^\wedge$ for two different values of the steering angle $\alpha_1$. When an abnormality is detected, the processing unit 42D generates, for example, a notification command signal for the display device 20. The operator of the combination vehicle 10 can visually recognize the occurrence of the abnormality.

The processing unit 42D may notify, by emitting a sound through the in-vehicle speaker, the operator of the combination vehicle 10 that the abnormality is detected. The operator of the combination vehicle 10 can auditorily recognize the occurrence of the abnormality.

<Procedure of Trailer Length Estimation Process>

Next, the procedure of a trailer length estimation process by the control device 42 will be described. The control device 42 starts executing the trailer length estimation process, for example, when a vehicle power supply is turned on. The control device 42 executes the trailer length estimation process according to a program stored in the storage device that is not shown.

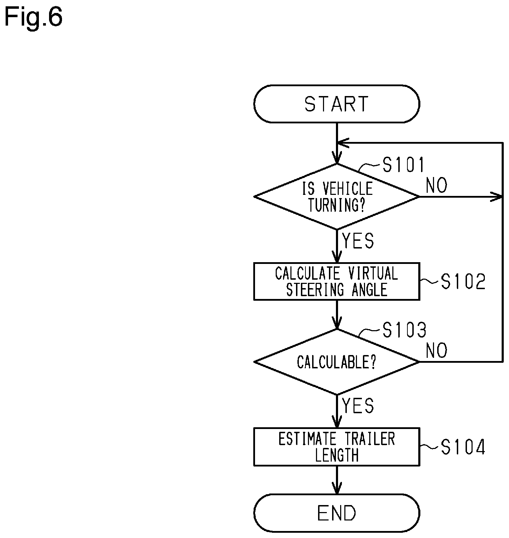

As shown in a flowchart of FIG. 6, the control device 42 determines whether the vehicle is turning (step S101). The vehicle is, for example, the tractor 11.

For example, the control device 42 determines that the vehicle is turning when all of the following three conditions (C1) to (C3) are satisfied. The control device 42 determines that the vehicle is not turning when at least one of the three conditions (C1) to (C3) is not satisfied.

$$C1.\ |V| \geq V_{th}$$

$$C2.\ |\alpha_1| \geq \alpha_{1th}$$

$$C3.\ |\beta| \geq \beta_{th}$$

where "V" is the vehicle speed, "$V_{th}$" is a vehicle speed determination threshold, "$\alpha_1$" is the steering angle of the front wheel 11F of the tractor 11, "$\alpha_{1th}$" is a steering angle determination threshold, "$\beta$" is the hitch angle, and "$\beta_{th}$" is a hitch angle determination threshold. The vehicle speed determination threshold $V_{th}$, the steering angle determination threshold $\alpha_{1th}$, and the hitch angle determination threshold $\beta_{th}$ are references for determining the turning state of the vehicle, and are set to values larger than "0". When the vehicle is traveling straight, both the steering angle $\alpha_1$ of the front wheel 11F and the hitch angle $\beta$ are "0".

The control device 42 waits until the vehicle starts turning (NO in step S101). When determination is made that the vehicle is turning (YES in step S101), the control device 42 calculates the virtual steering angle $\alpha_2$ (step S102). The control device 42 uses the above expression 1 to calculate the virtual steering angle $\alpha_2$.

Next, the control device 42 determines whether the trailer length can be calculated (step S103). The control device 42 checks whether division by zero occurs in the above expression 4. For example, the control device 42 checks whether the value of the denominator that is the divisor is "0" in the above expression 4. When the expression 4 includes division by "0", the control device 42 determines that the trailer length estimation calculation cannot be executed. This is because division of a numerical value by "0", namely so-called division by zero, is an operation that cannot be defined in computer numerical calculation. When determination is made that the trailer length estimation calculation cannot be executed (NO in step S103), the control device 42 advances the process to above step S101.

The control device 42 determines that the trailer length can be calculated when the value of the denominator of the expression 4 is not "0" and when the denominator of the expression 4 does not include a portion of division by "0". When determination is made that the trailer length can be calculated (YES in step S103), the control device 42 estimates and calculates the trailer length (step S104). The control device 42 uses the above expression 4 to calculate the estimated trailer length $l_2{}^\wedge$.

Through the above operations, the trailer length estimation process is completed.

<Changes in State Quantities of Combination Vehicle 10>

Next, changes in the state quantities of the combination vehicle 10 related to the trailer length estimation process will be described. The state quantities include the steering angle $\alpha_1$ of the front wheel 11F of the tractor 11 and the hitch angle $\beta$.

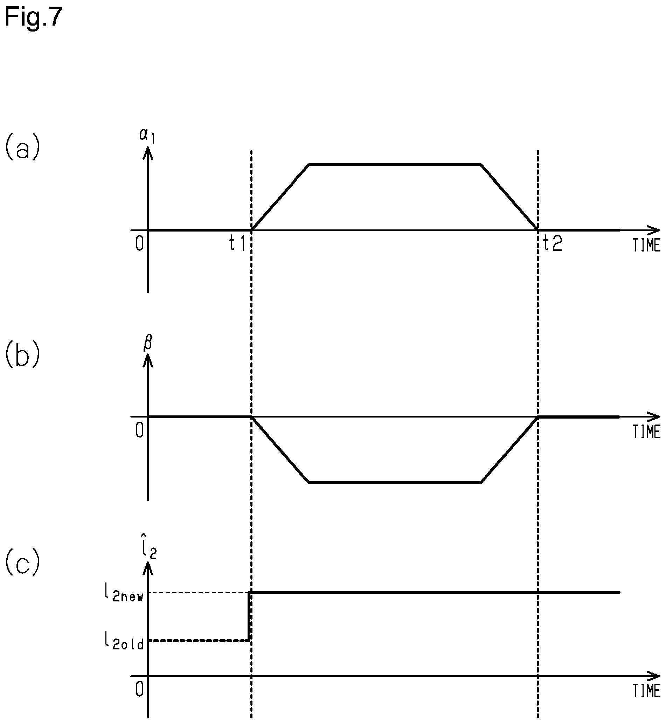

As shown in graph (a) of FIG. 7, for example, when the combination vehicle 10 is traveling straight and starts turning to the right in reverse (time t1), the absolute value of the steering angle $\alpha_1$ of the front wheel 11F of the tractor 11 gradually increases in the positive direction and eventually reaches a predetermined value. The predetermined value is a value corresponding to the turning radius of the combination vehicle 10. The absolute value of the steering angle $\alpha_1$ is maintained at a constant value during a period corresponding to the length of the turning route. When the combination vehicle 10 finishes turning to the right in reverse, the absolute value of the steering angle $\alpha_1$ gradually decreases toward "0" corresponding to the state in which the combination vehicle 10 travels straight. At the timing when the absolute value of the steering angle $\alpha_1$ reaches "0", the left turn of the combination vehicle 10 ends (time t2).

As shown in graph (b) of FIG. 7, when the combination vehicle 10 is traveling straight and starts turning to the right in reverse (time t1), the absolute value of the hitch angle $\beta$ of the trailer 12 gradually increases in the negative direction and eventually reaches a predetermined value. The predetermined value is a value corresponding to the turning radius of the combination vehicle 10. The absolute value of the hitch angle $\beta$ is maintained at a constant value during a period corresponding to the length of the turning route. When the combination vehicle 10 finishes turning to the right in reverse, the absolute value of the hitch angle $\beta$ gradually decreases toward "0" corresponding to the state in which the combination vehicle 10 travels straight. At the timing when the absolute value of the hitch angle $\beta$ reaches "0", the left turn of the combination vehicle 10 ends (time t2).

The control device 42 starts executing the trailer length estimation process at the timing when the combination vehicle 10 starts turning (time t1). The period in which the combination vehicle 10 is turning is a period in which the trailer length can be estimated. The turning period is the period from time t1 when the combination vehicle 10 starts turning to time t2 when the combination vehicle 10 finishes turning.

As shown in graph (c) of FIG. 7, the control device 42 reflects, in the control parameter, a current estimated trailer length $l_{2new}{}^{\wedge}$ obtained at the timing when the combination vehicle 10 starts turning. That is, the control device 42 updates the trailer length that is one of the control parameters stored in the storage device from a previous estimated trailer length $l_{2old}{}'$ to the current trailer length $l_{2new}{}^{\wedge}$. The previous estimated trailer length $l_{2old}{}^{\wedge}$ is an estimated trailer length used as one of the control parameters before the execution of the current estimation process. The previous trailer length $l_{2old}{}^{\wedge}$ includes, for example, the following three values (E1) to (E3).

(E1) Initial value of trailer length stored as vehicle specification value in storage device of control device 42

(E2) Set value of trailer length set by operator via in-vehicle input device
(E3) Previous estimated value of trailer length stored in storage device of control device 42

In the example shown in (c) of FIG. 7, the current trailer length $l_{2new}{}^{\wedge}$ is larger than the previous trailer length $l_{2old}{}^{\wedge}$. This may be caused by, for example, replacement of the trailer 12.

<Comparative Example>

Next, a comparative example of the trailer length estimation process will be described.

It is considered that the trailer length calculation unit 42C2 calculates the trailer length using the following expression 5. The expression 5 is obtained by solving the above expression 2 for the virtual wheelbase $l_2$ of the trailer 12.

[Math. 5]

$$l2 = -\left(\frac{l_1 \sin(\beta)}{\tan(\alpha_1)} + h_1 \cos(\beta)\right) \Big/ \left(1 + \frac{l_1}{V \tan(\alpha_1)} \dot{\beta}\right)$$

where "$\beta$" is the hitch angle, "$\beta(\cdot)$" is the hitch angle velocity, "$l_1$" is the wheelbase of the tractor 11, "$l_2$" is the virtual wheelbase of the trailer 12, "$V_{B1}$" is the velocity vector of the rear wheel 11R of the tractor 11, "$h_1$" is the distance between the rear wheel 11R of the tractor 11 and the hitch point $C_1$, and "$\alpha_1$" is the steering angle of the front wheel 11F of the tractor 11.

<Trailer Length Estimation Accuracy in Comparative Example>

Next, the trailer length estimation accuracy in the comparative example will be discussed. The trailer length is the virtual wheelbase $l_2$.

The preconditions include the following five items (D1) to (D5).

(D1) The sensor offset is removed. The sensors include the hitch angle sensor 51 and the vehicle speed sensor 52.

(D2) The wheelbase $l_1$ of the tractor 11 is known.

(D3) The distance $h_1$ between the rear wheel 11R of the tractor 11 and the hitch point $C_1$ is known. (D4) The road surface is flat and there is no disturbance from the outside of the combination vehicle 10.

(D5) The combination vehicle 10 needs to turn. The turning may be either forward or reverse.

As an example, a case where the combination vehicle 10 turns to the right in reverse will be discussed. Further, two vehicle states with different virtual wheelbases $l_2$ will be discussed. The first vehicle state is the state of the combination vehicle 10 in which the virtual wheelbase $l_2$ is a first value. The first value is, for example, 1.5 m. The second vehicle state is the state of the combination vehicle 10 in which the virtual wheelbase $l_2$ is a second value. The second value is, for example, 2.8 m.

As shown in graph (b) of FIG. 8, at an initial stage $T_{ini}$ in which the combination vehicle 10 starts turning, the absolute value of the steering angle $\alpha_1$ of the front wheel 11F gradually increases in the positive direction.

As shown in graph (c) of FIG. 8, at the initial stage $T_{ini}$ in which the combination vehicle 10 starts turning, the absolute value of the hitch angle $\beta$ gradually increases in the negative direction.

As shown in graph (d) of FIG. 8, at the initial stage $T_{ini}$ in which the combination vehicle 10 starts turning, the absolute value of the hitch angle velocity $\beta(\cdot)$ gradually increases in the positive direction.

As shown in graph (e) of FIG. 8, at the initial stage $T_{ini}$ in which the combination vehicle 10 starts turning, the absolute value of the vehicle speed V gradually increases in the negative direction.

As shown in graphs (b) to (e) of FIG. 8, the state quantities of the combination vehicle 10 have substantially similar change tendencies between the first vehicle state in which the virtual wheelbase $l_2$ is the first value and the second vehicle state in which the virtual wheelbase $l_2$ is the second value. However, the degree of change in each state quantity differs slightly between the first vehicle state and the second vehicle state. The state quantities include the steering angle $\alpha_1$ of the front wheel 11F, the hitch angle $\beta$, the hitch angle velocity $\beta(\cdot)$, and the vehicle speed V.

As shown in graph (a) of FIG. 8, at the initial stage $T_{ini}$ in which the combination vehicle 10 starts turning, there is a negative value period in which the estimated trailer length $l_2{}^\wedge$ that is the estimated value of the virtual wheelbase $l_2$ is a negative value. The negative value of the estimated trailer length $l_2{}^\wedge$ indicates that the virtual wheelbase $l_2$ has not been estimated and calculated correctly. This is because the value of the virtual wheelbase $l_2$ cannot be a negative value. A negative value period $\Delta T2$ in the second vehicle state is longer than a negative value period $\Delta T1$ in the first vehicle state.

At the initial stage $T_{ini}$ in which the combination vehicle 10 starts turning, in the first vehicle state in which the virtual wheelbase $l_2$ is the first value, the estimated trailer length $l_2{}^\wedge$ that is the estimated value of the virtual wheelbase $l_2$ changes abruptly from a negative value to a positive value. The value of the estimated trailer length $l_2{}^\wedge$ increases abruptly to a value that deviates significantly in the positive direction from a first value $l_{21}$ that is the true value, then decreases abruptly toward the first value $l_{21}$, and eventually reaches a value close to the first value $l_{21}$.

At the initial stage $T_{ini}$ in which the combination vehicle 10 starts turning, in the second vehicle state in which the virtual wheelbase $l_2$ is the second value, the estimated trailer length $l_2{}^\wedge$ that is the estimated value of the virtual wheelbase $l_2$ changes abruptly from a negative value to a positive value. The estimated trailer length $l_2{}^\wedge$ increases abruptly to a value that deviates significantly in the positive direction from a second value $l_{22}$ that is the true value, then decreases abruptly toward the second value $l_{22}$, and eventually reaches a value close to the second value $l_{22}$.

The period from the time when the combination vehicle 10 in the second vehicle state starts turning to the time when the value of the estimated trailer length $l_2{}^\wedge$ reaches the value close to the second value $l_{22}$ is longer than the period from the time when the combination vehicle 10 in the first vehicle state starts turning to the time when the value of the estimated trailer length $l_2{}^\wedge$ reaches the value close to the first value $l_{21}$.

From the above facts, when estimating the virtual wheelbase $l_2$ of the trailer 12 using the above expression 5, it is difficult to accurately estimate the virtual wheelbase $l_2$ particularly at the initial stage $T_{ini}$ in which the combination vehicle 10 starts turning. As the value of the virtual wheelbase $l_2$ increases, it takes more time to obtain an estimation result close to the true value of the virtual wheelbase $l_2$. As the value of the virtual wheelbase $l_2$ increases, the accuracy of estimation of the virtual wheelbase $l_2$ decreases. That is, the deviation between the true value of the virtual wheelbase $l_2$ and the estimated value of the virtual wheelbase $l_2$ increases.

<Trailer Length Estimation Accuracy in Present Embodiment>

Next, the accuracy of estimation of the virtual wheelbase $l_2$ in the present embodiment will be discussed.

The preconditions are the same as those in the above comparative example. That is, the preconditions include the above five items (D1) to (D5). As in the above comparative example, the case where the combination vehicle 10 in the first vehicle state turns to the right in reverse and the case where the combination vehicle 10 in the second vehicle state turns to the right in reverse will be discussed.

The state quantities of the combination vehicle 10, that is, the steering angle $\alpha_1$ of the front wheel 11F, the hitch angle $\beta$, the hitch angle velocity $\beta(\cdot)$, and the vehicle speed V, change over time as shown in graphs (b) to (e) of FIG. 8.

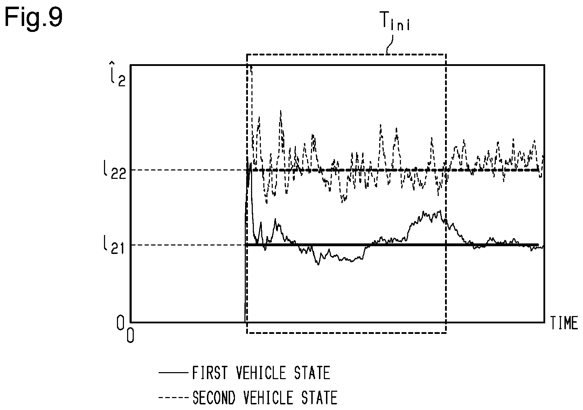

As shown in a graph of FIG. 9, at the initial stage $T_{ini}$ in which the combination vehicle 10 starts turning, there is no negative value period in which the estimated trailer length $l_2{}^\wedge$ that is the estimated value of the virtual wheelbase $l_2$ is a negative value both in the first vehicle state and in the second vehicle state. That is, it is understood that, both in the first vehicle state and in the second vehicle state, the estimation calculation of the virtual wheelbase $l_2$ is executed correctly from the initial stage $T_{ini}$ in which the combination vehicle 10 starts turning.

In the case of the first vehicle state in which the virtual wheelbase $l_2$ is the first value, at the initial stage $T_{ini}$ in which the combination vehicle 10 starts turning, the estimated trailer length $l_2{}^\wedge$ that is the estimated value of the virtual wheelbase $l_2$ changes within a range close to the first value $l_{21}$ that is the true value so that the first value $l_{21}$ is the median value. The value of the estimated trailer length $l_2{}^\wedge$ hardly deviates significantly from the first value $l_{21}$ that is the true value.

In the case of the second vehicle state in which the virtual wheelbase $l_2$ is the second value, at the initial stage $T_{ini}$ in which the combination vehicle 10 starts turning, the estimated trailer length $l_2{}^\wedge$ that is the estimated value of the virtual wheelbase $l_2$ changes within a range close to the second value $l_{22}$ that is the true value so that the second value $l_{22}$ is the median value. The value of the estimated trailer length $l_2{}^\wedge$ hardly deviates significantly from the second value $l_{22}$ that is the true value.

From the above facts, it is understood that, by estimating the virtual wheelbase $l_2$ of the trailer 12 using the above expression 4, it is possible to more appropriately estimate the virtual wheelbase $l_2$ even at the initial stage $T_{ini}$ in which the combination vehicle 10 starts turning. For example, an estimation result close to the true value of the virtual wheelbase $l_2$ can quickly be obtained regardless of the value of the virtual wheelbase $l_2$. Moreover, the accuracy of estimation of the virtual wheelbase $l_2$ can be ensured regardless of the value of the virtual wheelbase $l_2$. That is, the deviation between the true value of the virtual wheelbase $l_2$ and the estimated value of the virtual wheelbase $l_2$ decreases.

<Effects of Present Embodiment>

The present embodiment has the following effects.

(1) As shown in the above expression 4, the control device 42 estimates the length of the trailer 12 using the virtual steering angle $\alpha_2$ of the trailer 12. The virtual steering angle $\alpha_2$ is the steering angle of the virtual steered wheel of the trailer 12 when the trailer 12 is regarded as a single vehicle. Therefore, by using the virtual steering angle $\alpha_2$, the control device 42 can appropriately estimate the length of the trailer 12 in a manner similar to that of an ordinary-sized passenger car.

The expression 4 is an expression obtained by solving, for the length of the trailer 12, the simultaneous equations including the equation of motion for the hitch angle velocity $\beta(\cdot)$ shown in the expression 2 and the equation of motion for the virtual steering angle velocity $\alpha_2(\cdot)$ shown in the expression 3. The expression 4 is an expression including the virtual steering angle velocity $\alpha_2(\cdot)$ as a parameter.

(2) The virtual steering angle $\alpha_2$ of the trailer 12 and therefore the virtual steering angle velocity $\alpha_2(\cdot)$ change in response to the steering of the combination vehicle 10 by the operator. Therefore, by using the virtual steering angle velocity $\alpha_2(\cdot)$, the control device 42 can estimate the length of the trailer 12 at an earlier timing in response to the steering by the operator. That is, the response of the trailer length estimation to the steering by the operator is improved.

(3) As shown in the above expression 4, the control device 42 estimates the length of the trailer 12 using the virtual steering angle velocity $\alpha_2(\cdot)$ that is the time rate of change in the virtual steering angle $\alpha_2$ of the trailer 12. Therefore, the length of the trailer 12 can be estimated more quickly in a situation including the period immediately after the start of turning of the combination vehicle 10. The length of the trailer 12 can appropriately be estimated even immediately after the replacement of the trailer 12.

(4) The control device 42 estimates the length of the trailer 12 when the combination vehicle 10 starts turning. Therefore, the length of the trailer 12 can be estimated more appropriately. This is because, when the combination vehicle 10 is turning, the absolute value of the steering angle $\alpha_1$ of the front wheel 11F of the tractor 11, the absolute value of the virtual steering angle $\alpha_2$ of the trailer 12, and the absolute value of the hitch angle $\beta$ cannot be zero. When the combination vehicle 10 travels straight, the value of the steering angle $\alpha_1$ of the front wheel 11F of the tractor 11, the value of the virtual steering angle $\alpha_2$ of the trailer 12, and the value of the hitch angle $\beta$ are zero. Therefore, there is a possibility that the length of the trailer 12 cannot be estimated appropriately.

(5) The control device 42 estimates the virtual wheelbase $l_2$ of the trailer 12 as the length of the trailer 12. The virtual wheelbase $l_2$ is a value that reflects the length of the trailer 12. Therefore, the virtual wheelbase $l_2$ of the trailer 12 can be estimated as the length of the trailer 12.

(6) The control device 42 confirms that division by zero does not occur in the above expression 4, and then estimates the length of the trailer 12. Division of a numerical value by "0", namely so-called division by zero, is an operation that cannot be defined in computer numerical calculation. By estimating the length of the trailer 12 after confirming that division by zero does not occur in the expression 4, it is possible to suppress, for example, failure in the calculation process.

(7) A more accurate estimated trailer length $l_2$^ is reflected in the control parameter of the combination vehicle 10. Therefore, even after the trailer 12 has been replaced, the behavior controllability of the combination vehicle 10 can be ensured.

(8) The behavior of the combination vehicle 10 includes the reverse movement of the combination vehicle 10. The control device 42 executes the process for suppressing the occurrence of the jackknife phenomenon, for example, when the combination vehicle 10 is moved in reverse. The length of the trailer 12 affects the permissible range of the hitch angle $\beta$ before the occurrence of the jackknife phenomenon. Therefore, the limit value for the change in the hitch angle $\beta$ is set, for example, in the process of executing the behavior control on the combination vehicle 10. The control device 42 executes the process of correcting the limit value for the change in the hitch angle $\beta$ based on the estimated trailer length $l_2$^. Therefore, the occurrence of the jackknife phenomenon can be suppressed appropriately.

(9) The control device 42 detects an abnormality of the combination vehicle 10 based on the estimated trailer length $l_2$^. The abnormality includes, for example, disconnection of the trailer 12 from the tractor 11 and electrical disconnection of the hitch angle sensor 51 from the control device 42. When an abnormality is detected, the operator of the combination vehicle 10 is notified about the detection of the abnormality. The operator can visually or auditorily recognize the occurrence of the abnormality. Moreover, the operator can take measures to eliminate the abnormality.

(10) When the operator specifies the target virtual steering angle $\alpha_2$* of the trailer 12 through the operation on the input device 41, the reverse movement of the trailer 12 in a nonlinear and unstable system can be controlled with the trailer 12 regarded as a single vehicle of the tractor 11 alone, that is, an ordinary-sized passenger car of front-wheel steering. Therefore, the reverse operation of the combination vehicle 10 can be assisted more appropriately. The operator can move the combination vehicle 10 in reverse with the same feeling as that in the case of an ordinary-sized passenger car.

<Other Embodiments>

The present embodiment may be modified as follows.

-    As indicated by the long dashed double-short dashed line in graph (c) of FIG. 7, when the processing unit 42D of the control device 42 estimates the length of the trailer 12, the processing unit 42D may gradually change the estimated value of the length of the trailer 12 that is one of the control parameters from the previous value to the current value. The processing unit 42D executes, for example, smoothing calculation. The smoothing calculation is represented by the following expression.

Updated value = current value + (target value - current value) $\times$ coefficient

The target value is a current estimated value of the length of the trailer 12.

The processing unit 42D may use a moving average to update the value of the length of the trailer 12 as the control parameter. The moving average is an average value obtained by shifting each predetermined period.

In this manner, abrupt changes in the value of the length of the trailer 12 as the control parameter can be suppressed. That is, the value of the length of the trailer 12 as the control parameter gradually changes from the previous value to the current estimated value. Therefore, abrupt changes in the behavior of the combination vehicle 10 are suppressed.

-    The control device 42 may include a first filter and a second filter. The first filter and the second filter are, for example, low-pass filters. The first filter executes a filtering process on the electric signal generated by the steering angle sensor 30C. The electric signal indicates the steering angle $\alpha_1$ of the front wheel 11F of the tractor 11. Through the filtering process, noise superimposed on the steering angle $\alpha_1$ as the electric signal is removed. The second filter executes a filtering process on the electric signal generated by the hitch angle sensor 51. The electric signal indicates the hitch angle $\beta$. Through the filtering process, noise superimposed on the hitch angle $\beta$ as the electric signal is removed.

The first filter and the second filter have the same cutoff frequency. The first filter has a dead band in which the value near the zero point of the steering angle $\alpha_1$ is set to zero. The second filter has a dead band in which the value near the zero point of the hitch angle $\beta$ is set to zero. The width of the dead band of the first filter and the width of the dead band of the second filter are set to the same value. In this manner, the phase of the electric signal generated by the steering angle sensor 30C and the phase of the electric signal generated by the hitch angle sensor 51 can be made to agree with each other.

- In the process of step S101 in the flowchart of FIG. 6, a condition (C4) may be added as the vehicle turning determination condition.

$$C4. \ |YR| \neq 0$$

where "YR" is the yaw rate of the vehicle. The yaw rate YR is detected, for example, by an in-vehicle yaw rate sensor.

For example, the control device 42 determines that the vehicle is turning when all of the four conditions (C1) to (C4) are satisfied. By adding the condition (C4) as the turning determination condition, the turning determination accuracy can be improved.

- The length of the trailer 12 may be estimated using a Kalman filter based on a kinematic model of the combination vehicle 10. It is possible to improve the trailer length estimation accuracy and the robustness against noise.
- Depending on product specifications, the process of step S101 in the flowchart of FIG. 6 may be omitted. In this case, when executing the trailer length estimation process, the control device 42 first calculates the virtual steering angle $\alpha_2$ of the trailer 12 (step S102). Moreover, the process of step S103 in the flowchart of FIG. 6 may be omitted. In this case, the control device 42 estimates the trailer length without determining whether the trailer length can be calculated.
- The control unit 42B may have the functions of the estimation unit 42C and the processing unit 42D.

## Claims

1. A control device for a combination vehicle including a tractor including a steered wheel configured to change a direction of travel of the vehicle, and a trailer towed by the tractor, the control device comprising an estimation unit configured to estimate a length of the trailer based on a mathematical expression obtained by solving, for the length of the trailer, simultaneous equations including an equation of motion for a hitch angle velocity that is a time rate of change in a hitch angle and an equation of motion for a virtual steering angle velocity that is a time rate of change in a virtual steering angle, the mathematical expression including the virtual steering angle velocity as a parameter, wherein

   the hitch angle is an angle between a central axis extending in a longitudinal direction of the tractor and a central axis extending in a longitudinal direction of the trailer, and
   the virtual steering angle is a steering angle of a virtual steered wheel of the trailer when the trailer is regarded as a single vehicle.

2. The control device for the combination vehicle according to claim 1, wherein the estimation unit is configured to estimate the length of the trailer when the combination vehicle starts turning.

3. The control device for the combination vehicle according to claim 1 or 2, wherein:

   the trailer includes a wheel; and
   when the virtual steered wheel of the trailer is regarded as a virtual front wheel of the trailer and the wheel is regarded as a virtual rear wheel of the trailer, the estimation unit is configured to estimate, as the length of the trailer, a virtual wheelbase of the trailer that is a distance between axes of the virtual front wheel and the virtual rear wheel of the trailer.

4. The control device for the combination vehicle according to claim 1 or 2, wherein the estimation unit is configured to estimate the length of the trailer after confirming that division by zero does not occur in the mathematical expression.

5. The control device for the combination vehicle according to claim 1 or 2, wherein:

   the length of the trailer is one control parameter to be used to control behavior of the combination vehicle; and
   the control device includes a processing unit configured to execute a process of gradually changing a value of the length of the trailer as the control parameter from a previous value to a current estimated value when the length of the trailer is estimated by the estimation unit.

# EP 4 480 789 B1

**Patentansprüche**

1. Steuervorrichtung für ein Kombinationsfahrzeug, das eine Zugmaschine mit einem gelenkten Rad, das konfiguriert ist, um eine Fahrtrichtung des Fahrzeugs zu ändern, und einen von der Zugmaschine gezogenen Anhänger umfasst, wobei die Steuervorrichtung eine Schätzeinheit umfasst, die konfiguriert ist, um eine Länge des Anhängers basierend auf einem mathematischen Ausdruck zu schätzen, der durch Lösen simultaner Gleichungen für die Länge des Anhängers erhalten wird, die eine Bewegungsgleichung für eine Kupplungswinkelgeschwindigkeit, die eine zeitliche Änderungsrate eines Kupplungswinkels ist, und eine Bewegungsgleichung für eine virtuelle Lenkwinkelgeschwindigkeit, die eine zeitliche Änderungsrate eines virtuellen Lenkwinkels ist, umfassen, wobei der mathematische Ausdruck die virtuelle Lenkwinkelgeschwindigkeit als einen Parameter umfasst, wobei

   der Kupplungswinkel ein Winkel zwischen einer Mittelachse, die sich in einer Längsrichtung der Zugmaschine erstreckt, und einer Mittelachse, die sich in einer Längsrichtung des Anhängers erstreckt, ist und
   der virtuelle Lenkwinkel ein Lenkwinkel eines virtuellen gelenkten Rads des Anhängers ist, wenn der Anhänger als ein einzelnes Fahrzeug betrachtet wird.

2. Steuervorrichtung für das Kombinationsfahrzeug nach Anspruch 1, wobei die Schätzeinheit konfiguriert ist, um die Länge des Anhängers zu schätzen, wenn das Kombinationsfahrzeug beginnt, eine Kurve zu fahren.

3. Steuervorrichtung für das Kombinationsfahrzeug nach Anspruch 1 oder 2, wobei:

   der Anhänger ein Rad umfasst; und
   wenn das virtuelle gelenkte Rad des Anhängers als ein virtuelles Vorderrad des Anhängers betrachtet wird und das Rad als ein virtuelles Hinterrad des Anhängers betrachtet wird, die Schätzeinheit konfiguriert ist, um als die Länge des Anhängers einen virtuellen Radstand des Anhängers zu schätzen, der ein Abstand zwischen Achsen des virtuellen Vorderrads und des virtuellen Hinterrads des Anhängers ist.

4. Steuervorrichtung für das Kombinationsfahrzeug nach Anspruch 1 oder 2, wobei die Schätzeinheit konfiguriert ist, um die Länge des Anhängers zu schätzen, nachdem bestätigt wurde, dass eine Division durch Null in dem mathematischen Ausdruck nicht auftritt.

5. Steuervorrichtung für das Kombinationsfahrzeug nach Anspruch 1 oder 2, wobei:

   die Länge des Anhängers ein Steuerparameter ist, der zu verwenden ist, um das Verhalten des Kombinationsfahrzeugs zu steuern; und
   die Steuervorrichtung eine Verarbeitungseinheit umfasst, die konfiguriert ist, um einen Prozess des allmählichen Änderns eines Werts der Länge des Anhängers als den Steuerparameter von einem vorherigen Wert zu einem aktuellen geschätzten Wert auszuführen, wenn die Länge des Anhängers durch die Schätzeinheit geschätzt wird.

**Revendications**

1. Dispositif de commande pour un véhicule combiné incluant un tracteur incluant une roue directrice configurée pour changer une direction de déplacement du véhicule, et une remorque tractée par le tracteur, le dispositif de commande comprenant une unité d'estimation configurée pour estimer une longueur de la remorque sur la base d'une expression mathématique obtenue en résolvant, pour la longueur de la remorque, des équations simultanées incluant une équation du mouvement pour une vitesse angulaire d'attelage qui est un rythme de changement d'un angle d'attelage et une équation du mouvement pour une vitesse angulaire de braquage virtuel qui est un rythme de changement d'un angle de braquage virtuel, l'expression mathématique incluant la vitesse angulaire de braquage virtuel en tant que paramètre, dans lequel

   l'angle d'attelage est un angle entre un axe central s'étendant dans une direction longitudinale du tracteur et un axe central s'étendant dans une direction longitudinale de la remorque, et
   l'angle de braquage virtuel est un angle de braquage d'une roue directrice virtuelle de la remorque lorsque la remorque est considérée comme un seul véhicule.

2. Dispositif de commande pour le véhicule combiné selon la revendication 1, dans lequel l'unité d'estimation est configurée pour estimer la longueur de la remorque lorsque le véhicule combiné commence à tourner.

3. Dispositif de commande pour le véhicule combiné selon la revendication 1 ou 2, dans lequel :

la remorque inclut une roue ; et
lorsque la roue directrice virtuelle de la remorque est considérée comme une roue avant virtuelle de la remorque et la roue est considérée comme une roue arrière virtuelle de la remorque, l'unité d'estimation est configurée pour estimer, en tant que longueur de la remorque, un empattement virtuel de la remorque qui est une distance entre les axes de la roue avant virtuelle et de la roue arrière virtuelle de la remorque.

4. Dispositif de commande pour le véhicule combiné selon la revendication 1 ou 2, dans lequel l'unité d'estimation est configurée pour estimer la longueur de la remorque après avoir confirmé qu'une division par zéro n'apparaît pas dans l'expression mathématique.

5. Dispositif de commande pour le véhicule combiné selon la revendication 1 ou 2, dans lequel :

la longueur de la remorque est un paramètre de commande à utiliser pour commander le comportement du véhicule combiné ; et
le dispositif de commande inclut une unité de traitement configurée pour exécuter un processus de changement progressif d'une valeur de la longueur de la remorque en tant que paramètre de commande, d'une valeur précédente à une valeur estimée courante lorsque la longueur de la remorque est estimée par l'unité d'estimation.

# Fig.1

# Fig.2

Fig.3

Fig.4

Fig.5

Fig.6

```
            ┌─────────────────┐
            │      START       │
            └─────────────────┘
                     │
                     ▼        ╭─S101
                  ╱────────╲      NO
                 ╱ IS VEHICLE ╲──────────┐
                 ╲  TURNING?  ╱          │
                  ╲────────╱             │
                     │ YES               │
                     ▼                   │
            ┌─────────────────┐          │
            │ CALCULATE VIRTUAL│ ~S102    │
            │  STEERING ANGLE  │          │
            └─────────────────┘          │
                     │      ╭─S103        │
                     ▼          NO        │
                  ╱────────╲──────────────┤
                 ╱CALCULABLE? ╲           │
                  ╲────────╱              │
                     │ YES               │
                     ▼                   │
            ┌─────────────────┐          │
            │ ESTIMATE TRAILER │ ~S104    │
            │     LENGTH       │          │
            └─────────────────┘          │
                     │                   │
                     ▼                   │
            ┌─────────────────┐          │
            │       END        │          │
            └─────────────────┘          │
```

# Fig.7

(a)

$\alpha_1$

0　　　　t1　　　　　　　　　　　　　t2　　TIME

(b)

$\beta$

0　　　　　　　　　　　　　　　　　　　　　TIME

(c)

$\hat{l}_2$

$l_{2new}$

$l_{2old}$

0　　　　　　　　　　　　　　　　　　　　　TIME

# Fig.8

(a) FIRST VEHICLE STATE / SECOND VEHICLE STATE

(b) $\alpha_1$

(c) $\beta$

(d) $\dot{\beta}$

(e) $V$

Fig.9

—— FIRST VEHICLE STATE
---- SECOND VEHICLE STATE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190322317